# EUROPEAN PATENT APPLICATION

(11) **EP 1 431 616 A2**
(43) Date of publication of application: **23.06.2004**
(21) Application number: 03104867.1
(22) Date of filing: 19.12.2003
(51) Int. Cl.: F16H 7/24

(54) **Driven unit in a continuously variable transmission and a belt removal method**

(30) Priority: 20.12.2002 IT TO20021108
(71) Applicant: Lombardini S.r.l. a Socio Unico, 42100 Reggio Emilia (IT)
(72) Inventor: Borghi, Gianni, 42020 Albinea (IT)
(74) Representative: Jorio, Paolo, Dr. Ing.

(57) **Abstract**

A driven unit (12) for a continuously-variable-ratio drive (8), having a fixed half-pulley assembly (23) having a fixed half-pulley (13b) connected to an output member (9) of the drive (8); a movable half-pulley assembly (24) having a movable half-pulley (13a) mounted to slide axially with respect to the fixed half-pulley (13b) to form with it a V-shaped groove (15) of variable width for a V-shaped belt (C); and a spring (17) which forces the half-pulleys (13a, 13b) towards each other to keep the half-pulleys (13a, 13b) in contact with the belt (C); the fixed half-pulley assembly (23) has one or more threaded through axial holes (35) in which to screw respective screws (41), which cooperate with an annular surface (36) axially facing the holes (35) in the fixed half-pulley assembly (23) to exert thrust on the surface (36) and part the half-pulleys (13a, 13b) in opposition to the spring (17).

## Description

The present invention relates to a pulley for a continuously-variable-ratio drive.

Drives of the above type are known, which comprise a drive pulley connectable to an input shaft and defined by two half-pulleys defining between them a V-shaped groove which is variable in width to vary the winding diameter of a V-belt. One of the half-pulleys is movable axially with respect to the other, under the control of a centrifugal mechanical control device or an electronically controlled actuator, to vary the width of the groove.

Drives of the above type also comprise a driven pulley, which is connected to the drive pulley by the V-belt and is normally reactive, i.e. defined by two half-pulleys loaded axially towards each other by a spring so as to automatically adapt the work diameter inversely to that of the drive pulley.

Drives of the above type are used in microcars, in which the drive pulley is normally fitted to the drive shaft by a conical coupling.

In known drives, to change the belt, the drive pulley must be removed from the drive shaft using an extractor to exert axial force to part the conical coupling; and vibration, normally by hammering, must also be produced to assist detachment of the cones. The extractor alone is usually not enough, in that the necessary load transmitted to the fixed half-pulley to remove the drive pulley from the drive shaft would result in damage to the half-pulley.

The job is made difficult by the small size of the access openings to, and the limited amount of space available in, the engine compartment. In addition, the vehicle must be raised on a lift or placed over a pit to reach the drive from underneath; and the elastic vibration-damping supports - by which the whole drive train (engine, drive, and differential reducer) is supported, and which are normally extremely flexible - reduce the effectiveness of "hammering", so that severe blows are required to induce vibration, thus obviously endangering the drive.

It is an object of the present invention to provide a continuously-variable-ratio drive designed to eliminate the aforementioned drawbacks typically associated with known drives.

According to the present invention, there is provided a continuously-variable-ratio drive featuring a driven unit as claimed in Claim 1.

The present invention also relates to a method of removing a V-belt from a continuously-variable-ratio drive, as claimed in Claim 6.

A preferred, non-limiting embodiment of the present invention will be described by way of example with reference to the accompanying drawings, in which:
Figure 1 shows a diagram of a drive train featuring a variable-ratio drive with a driven unit in accordance with the present invention;
Figure 2 shows an axial section of the driven unit of the Figure 1 drive, in which the top and bottom halves show different operating positions.

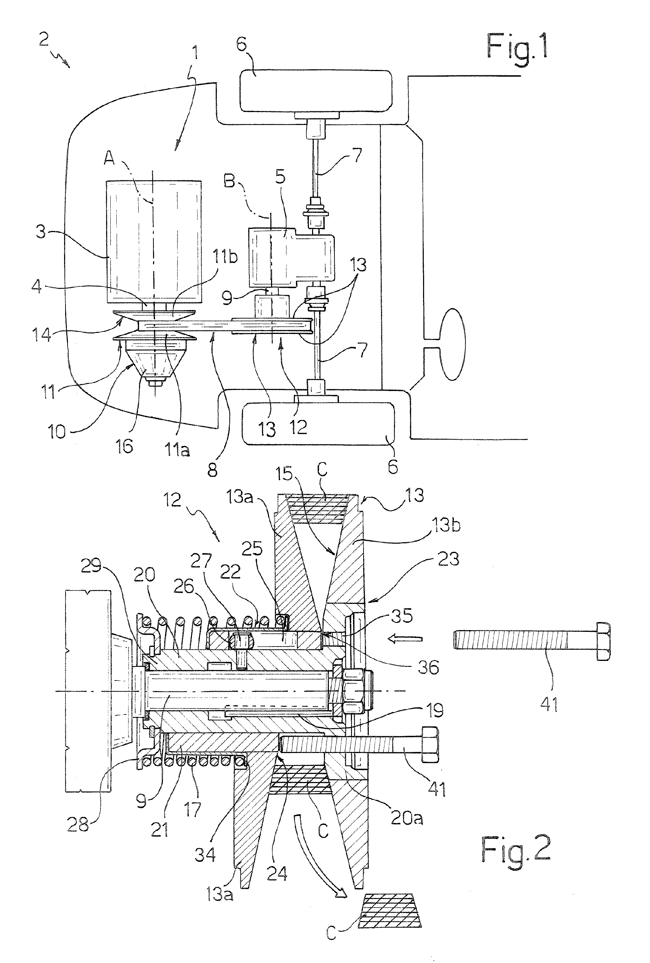

Number 1 in Figure 1 indicates as a whole a drive train for a microvehicle 2 (shown partly).

Drive train 1 comprises an internal combustion engine 3 having a drive shaft 4 of axis A; a differential reducer 5 connected to the drive wheels 6 by respective axles 7; and a continuously-variable-ratio drive 8 having an input member defined by drive shaft 4, and an output shaft 9, of axis B parallel to axis A, defining the input member of differential reducer 5.

Drive 8 substantially comprises a drive unit 10 fitted to the drive shaft 4 and having a drive pulley 11 connectable to the drive shaft; and a driven unit 12 having a driven pulley 13 fitted to output shaft 9.

Pulleys 11 and 13 are defined by respective pairs of half-pulleys 11a, 11b and 13a, 13b, which define respective grooves 14 and 15 of variable width for a V-belt C.

Drive unit 10 also comprises a centrifugal control device 16 - not shown in detail, by being known and not forming part of the present invention - for connecting pulley 11 to drive shaft 4, and for adjusting the width of groove 14 as a function of the speed of drive shaft 4.

Driven pulley 13 (Figure 2) is a reactive type : half-pulleys 13a, 13b are loaded axially in known manner towards each other by a spring 17, so as to automatically adapt the work diameter inversely to that of pulley 11.

More specifically, with reference to Figure 2, half-pulley 13b is integral with or rigidly connected to a tubular hub 20 fitted to output shaft 9 by means of a key 19, and is axially fixed on shaft 9. Half-pulley 13b is therefore connected rigidly to output shaft 9, and is hereinafter referred to as the "fixed half-pulley". In the example shown, fixed half-pulley 13b is conveniently made of light alloy, and is fixed, e.g. force-fitted, to an end flange 20a of hub 20, preferably made of steel. Half-pulley 13b and hub 20 together form a fixed half-pulley assembly 23.

Half-pulley 13a, also conveniently made of light alloy, is rigidly connected, e.g. driven on, to a tubular sleeve 21 preferably made of steel and fitted in sliding manner to hub 20, and is therefore referred to hereinafter as the "movable half-pulley". Half-pulley 13a and sleeve 21 together form a movable half-pulley assembly 24.

Sleeve 21 and hub 20 are connected by a torque-sensitive axial thrust compensating device 22, which substantially comprises one or more contoured slots 25 formed in sleeve 21, e.g. three slots 120° apart; and a corresponding number of cam followers defined by conveniently convex rollers 26 fitted to pins 27 extending radially from hub 20 and engaging respective slots 25. Device 22 is not described in detail, by not forming part of the invention.

Spring 17 is externally coaxial with hub 20 and sleeve 21, and is compressed axially between a stop plate 28 fixed to the opposite end 29 of hub 20 to that of flange 20a, and a cup-shaped member 34 fitted to sleeve 21 and cooperating axially with movable half-pulley 13a to protect slots 25 and keep out dirt or foreign bodies.

According to the present invention, fixed half-pulley assembly 23 has one or, preferably, a number of threaded axial through holes 35 facing a radial supporting surface 36 of movable half-pulley assembly 24. Holes 35 and surface 36 are conveniently located radially within the work region of belt C inside pulley 13.

In the example shown, holes 35 are formed in flange 20a of hub 20, and surface 36 is defined by a flat annular end surface, at least partly defined by an end surface of sleeve 21, of movable half-pulley assembly 24.

Threaded holes 35 receive respective pressure screws 41 which, when belt C is to be changed, can be screwed through flange 20a, as shown in the bottom half of Figure 2. Screws 41 exert axial thrust on movable half-pulley assembly 24, in opposition to the elastic resistance of spring 17, to move movable half-pulley 13a away from fixed half-pulley 13b and so increase the width of groove 15.

Since the width of groove 14 of drive pulley 11 is also maximum when the engine is turned off, belt C is slack and can be removed easily by slipping it over fixed half-pulley 13b of driven pulley 13.

Operation of drive 8 is known and therefore not described in detail.

The advantages of drive 8 according to the invention will be clear from the foregoing description.

By virtue of holes 35 and screws 41, belt C can be removed quickly and easily from pulleys 11 and 13 without removing drive assembly 10 from drive shaft 4, thus eliminating all the drawbacks referred to previously in connection with the known method.

Clearly, changes may be made to drive 8 without, however, departing from the scope of the accompanying Claims.

In particular, holes 35 may be replaced with through seats for securing a parting device, which need not necessarily be defined by a screw. For example, a hydraulic or electric tool may be used, comprising a portion which is secured to fixed half-pulley assembly 23, and a movable rod which cooperates with movable half-pulley assembly 24.

The number and radial location of the seats may also be different.

Finally, the seats may be formed directly in the fixed half-pulley, if this is made of material of sufficient mechanical strength, e.g. steel.

## Claims

1. A driven unit (12) for a continuously-variable-ratio drive (8), comprising a fixed half-pulley assembly (23) having a fixed half-pulley (13b) connected to an output member (9) of the drive (8); a movable half-pulley assembly (24) having a movable half-pulley (13a) mounted to slide axially with respect to said fixed half-pulley (13b) to form with it a V-shaped groove (15) of variable width for a V-shaped belt (C); and elastic means (17) which force said half-pulleys (13a, 13b) towards each other to keep said half-pulleys (13a, 13b) in contact with said belt (C); **characterized in that** said fixed half-pulley assembly (23) comprises at least one through axial seat (35) by which to secure a parting tool (41); and said movable half-pulley assembly (24) comprises a surface (36) axially facing said seat (35) of said fixed half-pulley assembly (23), and on which thrust is exerted by said parting tool (41) to part said half-pulleys (13a, 13b) in opposition to said elastic means (17).

2. A unit as claimed in Claim 1, **characterized in that** said seat (35) is a threaded hole, and said parting tool (41) is defined by a screw.

3. A unit as claimed in Claim 1 or 2, **characterized in that** said seat (35) and said surface are located radially within a work region of said belt (C).

4. A unit as claimed in one of the foregoing Claims, **characterized in that** said fixed half-pulley assembly (23) comprises a hub (20) fitted to said output member (9) of the drive (8) and having said seat (35); said fixed half-pulley (13b) being connected rigidly to said hub (20).

5. A unit as claimed in Claim 4, **characterized in that** said movable half-pulley assembly (24) comprises a sleeve (21) which slides on said hub (20), and said movable half-pulley (13a) connected rigidly to said sleeve (21); said surface (36) being formed at least partly on said sleeve (21).

6. A method of removing a V-shaped belt (C) from a continuously-variable-ratio drive (8) having a driven unit (12) comprising a fixed half-pulley assembly (23) having a fixed half-pulley (13b) connected to an output member (9) of the drive (8); a movable half-pulley assembly (24) having a movable half-pulley (13a) mounted to slide axially with respect to said fixed half-pulley (13b) to form with it a V-shaped groove (15) of variable width for said belt (C); and elastic means (17) which force said half-pulleys (13a, 13b) towards each other to keep said half-pulleys (13a, 13b) in contact with said belt (C); said method being **characterized by** the steps of securing a parting tool (41) to an axial through seat (35) in said fixed half-pulley assembly (23); and exerting axial thrust, by means of said parting tool (41), on a surface (36) of said movable half-pulley assembly (24) axially facing said seat (35) in said fixed half-pulley assembly (23), so as to part said half-pulleys (13a, 13b) in opposition to said elastic means (17).

7. A method as claimed in Claim 6, **characterized in that** said steps comprise screwing a screw (41) through an axial through hole (35) in the fixed half-pulley assembly (23); and exerting thrust on said movable half-pulley assembly (24) by means of said screw (41).
